# EUROPEAN PATENT SPECIFICATION

(11) **EP 1 252 957 B1**
(45) Date of publication and mention of the grant of the patent: **01.03.2006**
(21) Application number: 02076571.5
(22) Date of filing: 22.04.2002
(51) Int. Cl.: B23D 47/12, B28D 1/04, B27B 5/32

(54) **cutting or sawing machine**
Schneid- oder Sägemaschine
machine de coupe ou scie

(30) Priority: 23.04.2001 SE 0101439
(43) Date of publication of application: 30.10.2002
(60) Divisional application: 05106661.1
(73) Proprietor: Globe-Invent Aktiebolag, 472 93 Svanesund (SE)
(72) Inventor: Johansson, Mats, 472 93 Svanesund (SE)
(74) Representative: Hynell, Magnus

(56) References cited:
- EP-A- 1 090 705
- US-A- 3 893 240
- US-A- 4 717 205
- US-A- 4 959 907
- US-A- 5 027 517
- US-A- 5 103 705

## Description

### TECHNICAL FIELD

The invention concerns a cutting or sawing machine according to the preamble of claim 1, which is known from US 4 717 205, comprising at least one disk shaped tool having a first side, a second side, a peripheral edge portion which is the working part of the tool, and at least one driving member which is coaxial with the tool.

### BACKGROUND OF THE INVENTION

In, i.e., the building industry, e.g., cutting openings for doors, windows, ventilation ducts, stairways, foundations, etc. through, e.g., walls, roofs and floors are frequent operations. Objects of this type often are thick and they typically consist of reinforced concrete, stone, brick, masonry, metal, wallboard, panelling, and all similar building materials, or various composite building materials. Various techniques are employed for performing the cutting or sawing operations. In the first place, however, mechanically working machines are used, such as chain saw machines, machines of the type defined in the preamble and so called ring cutters. These machines have various advantages as well as disadvantages.

Chain saw machines employed for sawing hard materials, such as stone and concrete are diamond-tipped. Typically these sawing machines have a guide bar and a saw chain of a considerable length, which makes it possible to cut or to penetrate, respectively, thick objects. Among the drawbacks may be mentioned that the wear of the links of the saw chain is severe when cutting materials of the mentioned type, which shortens the actual life of the saw chain. This is a serious drawback, especially because diamond tipped saw chains are very expensive. Another drawback is that very powerful engines are required for this type of sawing machines. Further, also the guide bar and the drive wheels are subjected to wear because of the slurry that is generated during the work, especially because the chain slides in a groove in the guide bar and because only water is used as a lubricant. The guide bar and the drive wheel therefore also frequently need to be replaced.

As far as cutting or sawing machines having rotating cutting or sawing disks of a conventional type are concerned, the maximal cutting depth is limited to less than half the diameter of the used cutting or sawing blade. This is due to the fact that the rotation axis of the disk (blade), i.e. its spindle, always is longer than widths of the kerf (cut) which the blade makes in the object in question. When larger objects shall be cut or, e.g., when openings shall be made in thick walls, roofs or floors, machines having very large, rotating blades therefore are used. But the larger the blades are, the more powerful driving motors are required, which makes the driving motor correspondingly heavy. Those conventional machines which are used for cutting and/or sawing very thick objects therefore are not hand-held machines. Vice versa, hand-held cutting and sawing machines of conventional type can be used only for working comparatively thin objects. A machine belonging to this category is shown, e.g., in US-A-3,583,106.

Cutting and sawing machines of the ring saw type, e.g. a machine of the type which is shown in US-A-4,646,607, has an off-centre drive of the cutter blade, which means that it has no hindering central spindle, which allows cutting to greater depths than half the diameter of the saw blade. However, the diameter of hand-held machines of the ring saw type is limited because of the weight of the machine, which will be considerably large if the blade is large, especially as big blades also need to be comparatively thick in order to get a sufficient strength. As is the case for conventional cutting machines, also the necessary drive power is increased in relation to the diameter of the blade, which further increases the total weight of the machine. When the blade is diamond-tipped also the costs for the diamond-tipping is increased very much if the diameter as well as the thickness of the blade are increased. Therefore, there are technical as well as economical limitations of the blade size, which in turn restrict the feasibility of this type of machines as far as the thickness of the object to be worked is concerned.

So called flat sawing machine is a special type of saw machines. An example of this type of machine is shown in US-A-5,887,579. The saw blade of a machine of this type has one side which is flat, i.e. it is void of projecting parts. On the opposite side there is a spindle, which is driven by a driving assembly at the side of the saw blade. Machines of this type is used in order to make sawing, e.g., into a wall in the corner between two walls possible, in which case the flat side of the saw blade is applied close to one of the walls, such that the saw blade can saw into the other wall in the corner between the two walls. Nor this saw machine, however, can be used for cutting walls which are thicker than slightly less than half the diameter of the saw/cutting blade. The machine disclosed in US-A-4,717,205 aims at solving that problem, employing two flat sawing blades. However, due to the design of tool carrier and driving member, new problems are raised.

Further it is known through WO 01/23157 to dig into an object, more particularly into a rock formation desired to be mined in connection with a quarrying process, wherein two slots are cut into the rock at a distance from one another, where after the rock material between the slots are crushed in a subsequent operation. The tools in this case are rotated about a joint axle having axle spindles which project laterally from the outer sides of the outer tools of the tool assembly. In the same way as in connection with conventional cutting machines these axle spindles set a limit for the penetration depth. Alternatively, a very broad trench may be achieved through several working operations, which allows working deeper into the rock formation, so that finally a ditch-like trench having sloping walls is achieved.

In light of the above background there is a long felt need of machines of the type defined in the above preamble, by means of which it is possible to cut or saw deeper than what has been possible to do according to prior art, employing disk shaped, rotatable tools having a certain diameter.

It is particularly desirable to make it easy to handle the machine, not only during the sawing or corresponding operation but also, e.g. in connection with exchange of replacement parts, in the first place of the tools. It is also desirable to reduce the number of machine components which must handled in connection with change of tools. For these and other reasons, it is desirable to be able to use tool units of the type referred to in the above preamble and to adopt the cutting or sawing machine to such tool units.

### DISCLOSURE OF THE INVENTION

It is the purpose of the invention to address the above mentioned problems by providing a cutting or sawing machine according to claim 1 by means of which it is possible to cut or to penetrate thicker objects than what has been previously possible by means of disk shaped, rotatable tools having a certain diameter.

The driving member is connected or connectable to said first side of the tool, that that side of the peripheral edge portion which is part of said second side of the tool defines a plane which forms a limit of the, in the axial direction, maximally projecting part of the tool unit, and that the driving member has at least one circumferential driving surface provided to be able to cooperate with a power transmission. According to another aspect of the invention, the cutting or sawing machine is characterised in that at least one tool unit of the above kind is rotatably mounted in the tool carrier. Typically, according to an aspect of the invention, the tool unit or tool units, as well as any additional rotational tool which may be included in a tool assembly comprising said tool unit or tool units, is/are provided adjacent to a front end of the tool carrier.

In the tool unit, at least the main part of the second side of the tool is typically essentially flat inside of the peripheral edge portion which is the working part of the tool.

According to a first preferred embodiment of the tool unit, the tool and the driving member are made as two separate components, which subsequently have been permanently united to form an integrated unit. According to another conceivable embodiment, the tool and the driving member are made of a blank which have been worked to adopt the final shape of the tool unit. More specifically, the driving member can be formed of a central portion of the tool blank, which has been pressed out in the axial direction of the tool unit and thereafter has been worked to achieved the final shape of the driving member. According to still another conceivable embodiment of the tool unit, the driving member and the tool consist of two separate components, which can be connected by means of follower and coupling members to form the tool unit.

According to another aspect of the tool unit, the tool unit is provided with a central axel spindle, said axle spindle extending in the axial direction away from the first side of the tool. The axle spindle, e.g., may constitute a part of the driving member and/or of the tool. More specifically, the axle spindle may be an integrated part of the tool and extend through and beyond the driving member.

Further, according to an aspect of the invention, the tool unit has at least one through hole. The through hole, e.g., may be provided in the centre of the tool.

The tool unit, according to still another aspect of the invention, may be characterised in that the circumferential driving surface of the driving member of the tool unit has a shape which may form at least a part of the surface of a power transmission groove. According to a preferred embodiment, the driving surface is designed as a bevelled surface on that side which is turned from the tool of the tool unit. The bevelled surface, e.g., may be designed such that it can define a side of a V-belt groove.

Further, according to another aspect of the tool unit of the invention, the driving member is designed to form one half of an axially parted driving wheel.

According to an embodiment of the tool unit, the driving member consists of a driving wheel.

According to still another aspect of the machine of the invention, the tool carrier has an essentially greater width than thickness, the width being defined as the extension of the tool carrier in a plane which is perpendicular to the axles of rotation of the tool unit and perpendicular to the longitudinal direction of the tool carrier. Typically, the tool carrier consists of an elongated bar, preferably a flat bar.

Further, according to the machine of the invention, the machine comprises two driving members, one on each side of the tool carrier, wherein preferably said driving members are in the form of driving wheel halves in combination forming an axially parted driving wheel.

According to the invention, the driving members extend beyond the front end of the tool carrier. A preferred embodiment of the machine is characterised in that the driving wheel halves, which in combination form said driving wheel, extend beyond the front end of the tool carrier, and that the driving wheel halves in front of said front end of the tool carrier between them form a power transmission groove, in which an endless power transmission device is in engagement in front of the tool carrier for rotation of the driving wheel. The driving wheel halves may be connected to one another via an axle, which is journalled in a bearing in the tool carrier. Suitably, the axle is formed of two axle spindles, each of which is provided as part of the tool unit and extent towards one another to form the axle. This makes it possible to design the two driving members/driving wheels identical, which facilitates manufacturing, storing, and exchange of tool unit and/or driving members. Further, according to an aspect of the machine, the power transmission device has a width which is maximally as large as the thickness of the driving wheel.

According to a preferred embodiment of the machine, the power transmission groove is a V-belt groove formed of bevelled surfaces on the two driving wheel halves, in which case the endless power transmission device is a V-belt. According to an alternative embodiment, the power transmission groove consists of a toothed belt groove formed of toothed, circumferential driving surfaces on the driving members, which consist of driving wheel halves, in which case the endless power transmission device consists of a tooth belt in engagement with the teeth of the toothed belt groove. Further, according to an aspect of the invention, the machine comprises guard devices for the power transmission device, said guard devices comprising an edge guard which extends outside of the power transmission device, preferably at a distance from and along the power transmission device.

According to an aspect of the invention, the machine comprises only one tool unit. According to that aspect,the tool carrier may have a length which is at least longer than the radius of the disk shaped tool included in the tool unit, which is provided in the front end of the tool carrier. Preferably, however, the tool carrier has a length which is at least larger that the diameter of the tool. More particularly, according to still another aspect of the machine, the entire machine body is provided at a distance from the tool with reference to the radial direction of the tool, the tool carrier extending from the machine body over said radial distance and further to and beyond the centre of the tool.

According to said aspect of the invention, according to which the machine comprises only one tool unit, the axial distance between the first side of the tool and a centre plane of the tool carrier typically is at least 2.5 and maximally 50 mm, preferably maximally 25, suitably maximally 10 mm.

According to a preferred embodiment of the machine of the invention, it comprises at least two tool units, which are coaxial and mounted in the tool carrier. Further, according to an aspect of these preferred embodiment, the machine is characterised in that it comprises at least two disk shaped tools which are outer tools of a tool assembly, each of said outer tools having a first side which is an inner side of the tool, a second side which is an outer side of the tool, and a peripheral edge portion which is the working part of the tool, and that the side of the peripheral edge portion which is part of the outer side of the outer tools defines a plane which forms a limit of the maximally projecting part of the tool assembly in the region of the said outer sides.

According to another aspect of the preferred embodiment of the machine of the invention, the number of tool units of the machine is two.

According to a conceivable embodiment of the machine which comprises at least two tool units, the tools have equally large diameters. According to an aspect of that embodiment, the tool carrier has a length which is at least larger than the radius of the tools, which are provided in the front end of the tool carrier. Preferably, however, the tool carrier has a length which is at least larger than the diameter of the tools. More particularly, according to an aspect of that preferred embodiment, the machine body is provided at a distance from the tools with reference to the radial direction of the tools, the tool carrier extending from the machine body over said distance and further on the to and beyond the common centre of the tools.

According to a preferred embodiment of the machine comprising at least two tool units, the tools have differently large diameters. According to that preferred embodiment, the tool carrier may have a length which is at least longer than the radius of the largest tool, said tools being provided in the front end of the tool carrier. Preferably, however, the tool carrier has a length which is at least longer that the diameter of the largest tool, which enables the machine body, according to an aspect of the machine, to be provided at a distance from the largest tool with reference to the radial direction of the tool, in which the tool carrier extends from the machine body over said distance and further on two and beyond the common centre of the tools. Preferably, the distance between the tools is shorter than the radius of the smallest tool. More particularly, a preferred embodiment is characterised in that the distance between the tools is at least 5 and maximally 100 mm, preferably maximally 50 mm, suitably maximally 20 mm.

As above mentioned, the number of rotatable, coaxial tool units included in the tool assembly may be more than two, but the preferred number is two. These facilitates the establishment of two parallel kerfs (cuts) with a suitable distance between the kerfs, which makes the removal of the material between the kerfs desirably easy.

The smallest tool diameter is normally at least 60 mm, typically at least 80 mm, regardless the diameters of the tools are equally or differently large. In the case the tools have differently large diameters, the diameter of the smallest tool normally is max. 400 mm, preferably max. 250 mm, and suitably max. 150 mm. The larger tool may have a diameter which is at least 40 mm, preferably at least 60 mm, but not more than 100 mm larger diameter than the smallest tool. In the case when the tools have equal diameters, when the number of tools is two, the diameter should be at least 80 mm, but should normally not exceed 500 mm. Preferably, the diameter is 60 to 300 mm, suitably 80 to 250 mm. A very important advantage with small diameters before large diameters is that tools having a small diameter do not require as large engine power as tools having larger diameters. The reason why conventional cutting and saw machines nevertheless are provided with tools having large, and in some cases very large, diameters, is that large diameters are required for the achievement of a desired penetration depth, a condition which is eliminated by the invention.

With reference to the above statements concerning conceivable tool diameters and distances between the tools, it is advantageous if the distance between the tools is small. A very important advantage with a short distance between the tools is that this essentially facilitates the removal of the material between the kerfs (cuts). If the distance between the kerfs is for instance not larger than the order of 10 or 15 mm, the material may, even if the material consists of e.g. concrete or brick, even loosen successively as the kerfs are being established, because of vibrations and friction between the tools and the material between the kerfs. Possibly, it may be necessary that the operator wobbles or sways the machine slightly in the lateral direction during the working operation. In other words, the need of a subsequent clearing operation for removing the material between the kerfs may be completely eliminated, or at least may such a clearing operation be essentially facilitated.

As far as the guard devices for the power transmission device is concerned, said guard devices comprises an edge guard which extends on the outer side of the power transmission device along at least a section thereof which is exposed to the environment. Such an edge guard may comprise a bent metal rail having at least as large width as the power transmission device, but smaller or at least not larger width than the distance between the disk shaped tools having a driving member on said first sides which face one another. Further, said guard devices may comprise side guards on each side of the power transmission device, the distance between the outer surfaces of the side guards being smaller than the axial extension of the tool assembly. The distance between the outer sides of the side guards in other words is smaller than the width of the cleared groove having flat walls that is established in the object during the operation of the machine, such that also the side guards may be entered into the groove as the tools successively are caused to penetrate deeper into the object.

According to the typical embodiment of the invention, the edge guard is provided at a comparatively short distance outside the tool carrier and at a very short distance outside the power transmission device, i.e. the driving belt or the like. It is, however, conceivable to provide the edge guard or corresponding at a substantial distance from the tool carrier, which makes it possible to provide driving wheels with different diameters on the machine, i.e. driving wheels having either a small or a substantially larger diameter, as well as driving wheels having intermediate sizes, adapted to the diameter of the tool, or to the diameters of the tools, in order to make it possible that the tools will get a desired periphery speed, also when the driving belt or corresponding power transmission device has a given speed.

The power source of the drive machinery is provided in the machine body. The power source may consist, e.g., of a combustion engine, an electric, hydraulic, or pneumatic motor. It is true that the field of application of the machine of the invention is not limited to the building industry, but that field is a very important field of use for the machine. Combustion engine powered machines, however, are not suitable to be used inside buildings for health-impairing reasons. At many such working sites, however, hydraulic or pneumatic systems are available, which makes it possible to use hydraulically or pneumatically powered machines. But also electricity usually is available in building work places. Electric powering of the machine of the invention, e.g. for that reason is suitable.

Further features and aspects of the invention will be apparent from the appending claims and from the following detailed description of the cutting and saw machine according to the invention and the method to work with said machine.

### BRIEF DESCRIPTION OF DRAWINGS

Embodiments of the invention will be described in the following with reference to the accompanying drawings, in which
- Fig. 1: shows a schematical side view of parts of a machine according to the invention, including a tool unit according to a preferred, first embodiment and a tool guard brought to a front functional position,
- Fig. 2: shows the machine according to Fig. 1 with the tool guard in a withdrawn position allowing change of tool unit,

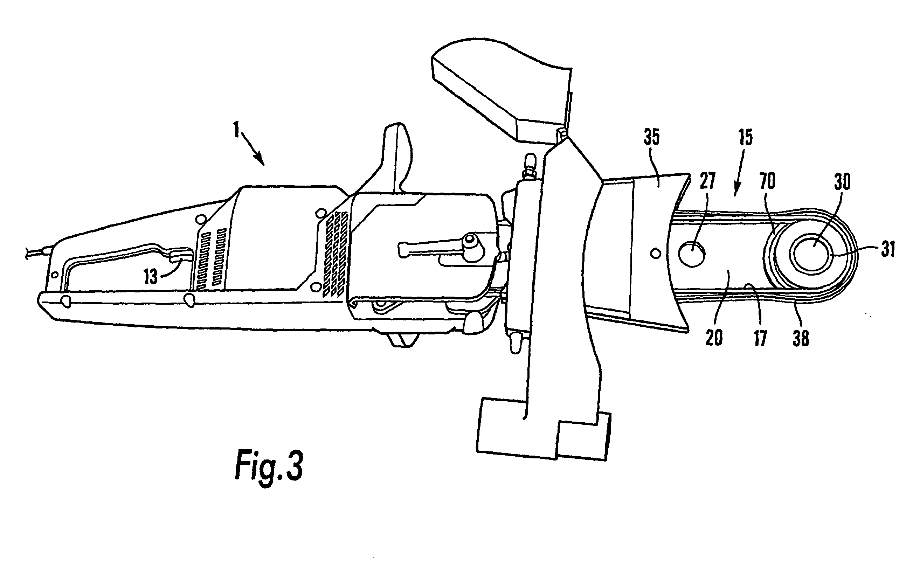

- Fig. 3: shows a schematical side view of the machine according to Fig. 2, the tool unit being removed,
- Fig. 4: shows a schematical side view of the machine according to a second embodiment of the invention including two rotatable tool units, which are concentrically arranged with a joint centre axis,
- Fig. 5: shows a tool and a driving member/driving wheel half, which form a tool unit according to a preferred embodiment,
- Fig. 6: shows a driving member/a driving wheel half,
- Fig. 7: at a larger scale shows a front portion of the machine according to Fig. 3 without tool unit,
- Fig. 8: is a view along the line VIII-VIII in Fig. 2,
- Fig. 9: shows a view along the line IX-IX in Fig. 4,
- Fig. 10: shows an axial cut through a driving wheel half/a driving member,
- Figs. 11A-D: schematically show a section through the object which is being worked, illustrating an embodiment of the working principle of the invention,
- Fig. 12: schematically shows a side view of an electrically powered cutting or sawing machine according to a conceived embodiment of the invention, and
- Fig. 13: shows the same machine from above.

### DETAILED DESCRIPTION OF EMBODIMENTS

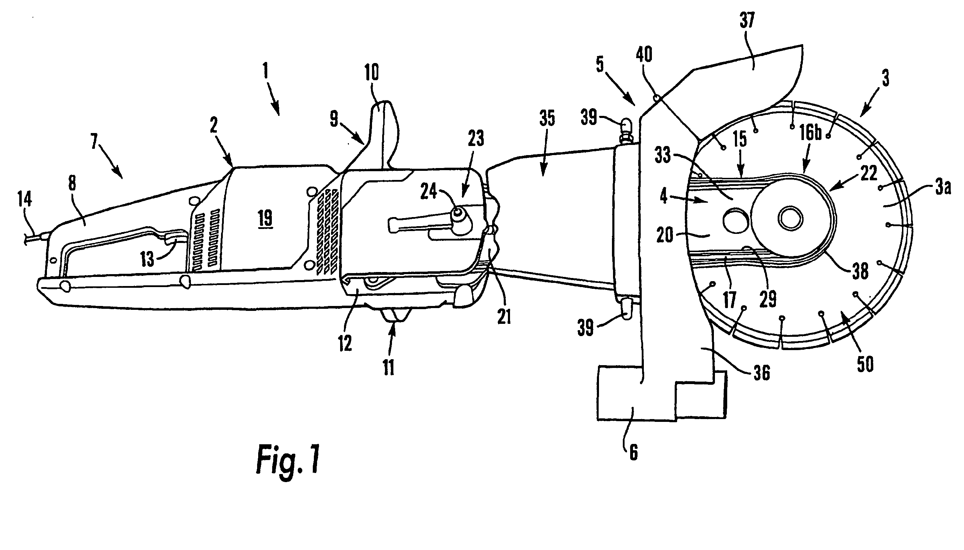

With reference to Fig. 1 there is schematically and in a side view shown parts of a first embodiment of a cutting or sawing machine 1 for working an object, comprising a rotatable, disk shaped tool 3 for rotating working of objects, working pieces or blanks, including cutting and sawing in objects such as building constructions/materials having a large extension, for example concrete constructions, or in more limited working pieces, such as stone blocks. The main part of the machine 1 comprises a power source which not necessarily has to be located in direct connection to the tool 3 but which transmits a driving force to other main parts via a suitable power transmission.

In the embodiments shown in the drawings, the power force, however, consists of a motor in a machine body 2, which is located at a radial distance from the tool 3. Between the machine body 2 and the tool 3 there is a unit 4, denominated transmission and carrying unit, provided to transmit the power from the motor in the machine body to the tool 3 and for locating said tool 3 at a certain, defined distance from the machine body 2, which distance considerably may exceed the diameter of the tool 3 of all so far conventionally hand-held or otherwise employed for rotational working of movable working machines. Further, the machine 1 may include an adjustable tool guard 5, as according to the embodiments shown in the drawings, and a retainer 6 for a possible vacuum dust cleaner device. The dust cleaner device or devices, however, are not shown in any detail. Further devices, e.g., for spraying water, may also be applied.

The machine body 2 thus preferably and suitably may consist of a machine body of known, conventional hand-held or mobile cutting or sawing machine, e.g. a conventional motor saw body, for example a conventional motor saw body with a combustion engine, an electric motor powered saw body, including an electric motor, or a machine body including a hydraulic motor or a pneumatic motor.

In the preferred embodiments which are specifically shown in the drawings, the machine body 2, however, consists of a hand-held unit comprising an electric motor, a rear gripping appliance 7 with a control handle 8 and a front gripping appliance 9 with a control handle 10 for the provision of a good control of the machine 1 when pressing the tool against the object in question, for example in a first saw kerf, and then for achieving a required stability during the rest of the working until the desired result, i.e. the desired sawing depth, has been achieved. In front of the front control handle 10, i.e. in the direction towards the tool 3, there is mounted a control handle guard 11 of any known suitable model and function.

The machine body 2 also comprises a chassis 12. The motor in question, a motor control 13 with an optional variable-speed gear drive and coupling, various conduits and cables for example cooling water, hydraulic oil, electric power supply, vacuum dust cleaning, etc. are mounted on or to the chassis 12 (certain parts being not shown in detail). The motor control 13 is suitably provided in a conventional way at the rear control handle 8. In connection to the motor in question there is provided a bearing housing with a suitable bearing, from which a not shown rotatable axle shaft projects, on which shaft there is provided a first driving wheel (not shown), which suitably consists of a gear, a belt pulley, or any other suitable drive for moving a power transmission device 17 along, around or inside the transmission and carrying unit 4 for driving a second, front driving wheel 16b which is integrated with the tool 3.

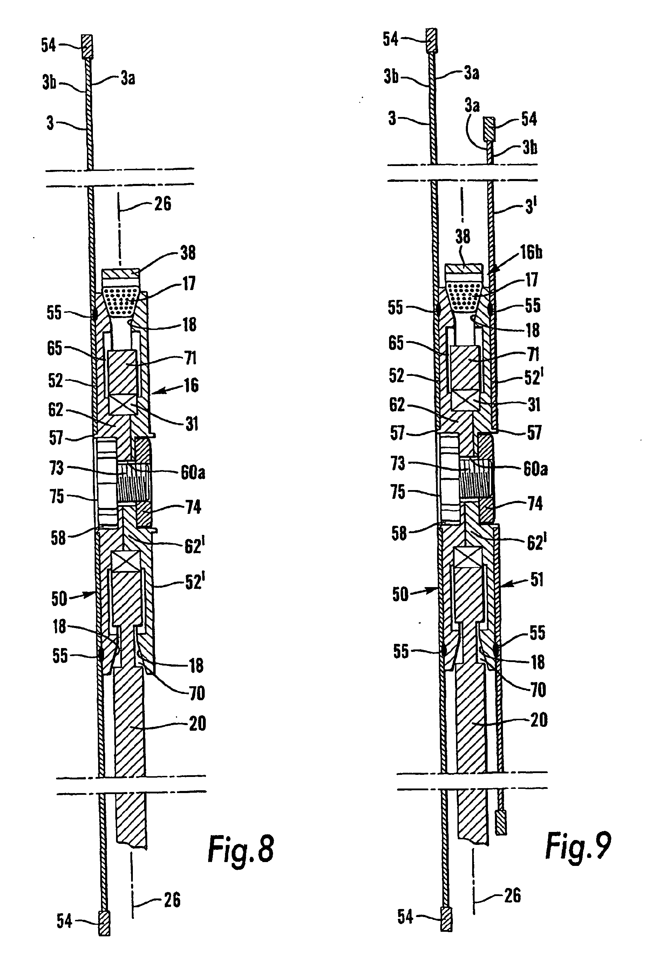

The said power transmission device 17 preferably consists of a flexible, endless device 17 in the form of for example a chain, driving belt or V-belt 17, driving band or any other similar, suitable device, the cross section and construction of which are adapted to the rear and front driving wheels/driving members in question. In the case of V-belt drive, for example, the two driving wheels comprise a wedge shaped, peripheric groove 18, see Figs. 8, 9. The invention, however, is not restricted to only flexible, endless transmission devices such as V-belts 17. To the extent that other possible power transmission devices exist, or can be suggested, also such ones may be employed in connection with the present invention, such as for example a series of cooperating gears along the transmission and carrying unit 4.

All the machine elements mentioned in the two paragraphs above, but not shown in detail, consist of well known machine details. Therefore they are not described in detail or shown but are located behind a number of guards 19 enclosing said details which may be dismounted in a suitable way.
The transmission and carrying unit 4 comprises an elongated construction in the form of a flat bar 20 for carrying the tool 3, also referred to as tool carrier in the following, including or comprising the front driving wheel 16b and the transmission device 17 at a certain, defined distance from the machine body 2. The bar 20 comprises a first, inner end 21, which is provided to be mounted to the machine body 2 on a fixed but dismountable way, which is described more in detail below, and a second, outer end, which is referred to as the bar point 22 below, at which end the tool 3 and the transmission device 17 are rotatably mounted according to the embodiment in question.

At the rear end 21 of the bar 20 a not shown fastening and stretching device 23 is provided, suitably in any form of screw joint which may be eased, said joint in a manner per se comprising fastening members 24, e.g. consisting of a number of screws and nuts, for securing the bar 20 to the machine body 2, and a cross-shaped opening through the bar 20. By the provision of said opening and fastening members, the bar 20 can be adjusted in a suitable axial and/or transversal direction along the centre plane 26, which is common for the rear driving wheel and the longitudinal extension of the bar 20 for the achievement of a stretching or unstretching in said centre plane of the flexible, endless transmission device 17, relative to the two driving wheels. Along the flat sides of the bar 20 there are a number of weight and material reducing openings 27. Between these openings 27 there are also a number of smaller, threaded holes 28 for mounting a blade guard 5 to the bar 20.

The inner end 21 of the bar 20 may have a blunt basic shape and a rectangular cross section towards the opposite end 22. More specifically, the rear short end is arranged at a square angle relative to the longitudinal edges 29 of the bar 20. The short end is adjustably mounted adjacent to the rear driving wheel, and due to the above mentioned fastening and stretching device 23, the short end 21 can be moved in a direction from or towards the driving wheel 16a, wherein the flexible, endless transmission device 17, which in the present case especially consists of a V-belt 17, can be dismounted when it is worn out and be replaced by a new one. According to the shown embodiments, the transmission device 17 is provided to run along and parallel with the edges 29 of the bar 20 in the centre plane 26, mentioned above, of the driving wheels and of the bar 20, but at a distance from the edges 29 of the bar 20.

In the not shown embodiments it is, however, conceivable that the transmission device 17 instead runs in a groove provided in said bar edges and not as according to the embodiments shown in the drawings where the V-belt runs freely from the bar edges and is provided to contact only the peripheries of the driving wheels.

The second, outer end, the bar tip 22, has a rounded shape according to the embodiment and comprises a hole 30 in the bar 20, which is central relative to said rounded shape, and adapted for a suitable bearing 31, e.g. a ball bearing or a sliding bearing, said bearing 31 having a fit, i.e. diameter, which only provides such a sufficient play that the bearing 31 easily can be mounted in said central hole 30. It is also conceivable that the bearing 31 in any suitable known manner is fastened in the hole, e.g. through shrink fit. The outer end 22 may also comprise a recess in both the bar surfaces for the outer driving wheel, which recesses also may serve as a circular sliding surface for contacting surfaces of the driving wheel.

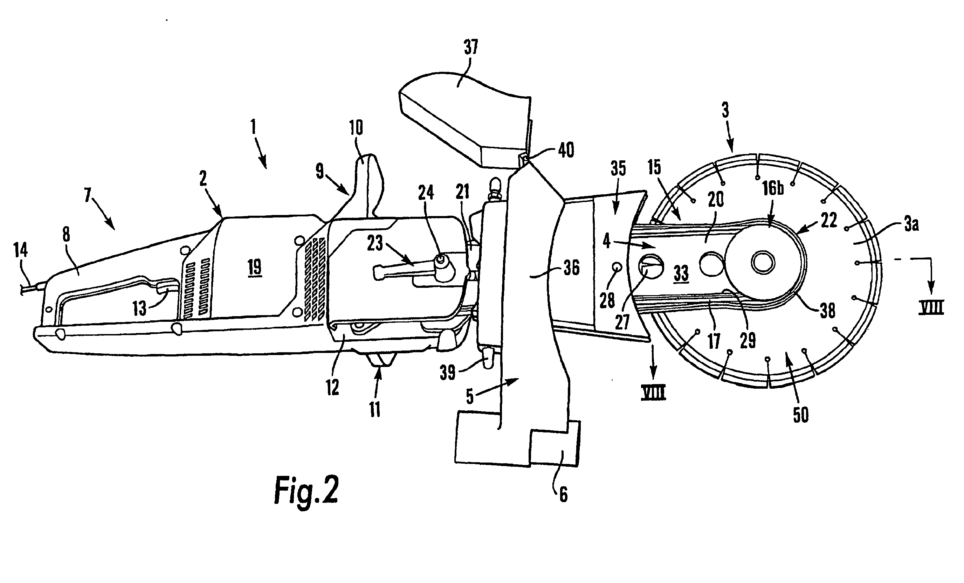

With reference to the preferred embodiment of the guard devices of the machine, said devices include the tool guard 5 shown schematically and in a side view in Figs. 1 and 2, and a fixedly mounted, double walled side guard 35 for the transmission and carrying device 4. The tool guard 5 comprises a blade guard 36 which is displaceably provided along the bar 20 and along said double walled side guard 35, said blade guard also comprising a section 37 which can be folded from the rest of the displaceable blade guard 36. Further, the guard devices include an edge guard 38 for the transmission device, i.e. the flexible, endless V-belt 17 according to the shown embodiments, said edge guard 38 running along the outside of the V-belt 17 and around the front, outer point of the bar 20 or at least along its longitudinal edges 29. The thickness of the side guard 35, i.e. the transversal distance between the outer surfaces of the side guard, is smaller than the distance between the outer sides of the tools 3, 3', i.e. said second sides, which means that the side guard 35 can be entered into the wide groove, which, according to the method of using the machine of the invention is established in the object that is being worked, when the material between the kerfs (cuts) which have been made by the tools, has been removed, and when the wide groove having flat and parallel side walls has reached such a depth that also the side guard 35 can be entered in the groove, when the blade guard 36 has been withdrawn along the side guard 35.

The double walled side guard 35 suitably has one end welded to one outside 33 of the bar 20, while the other end is fastened by screwing such that the transmission device 17 can be replaced simply and efficiently just by removing a guard plate 35. The two plates of the side guard 35, which extend in parallel along the bar 20 to a certain distance outside of the said edge guard 38, guarantee that the accident risk is minimised, at the same time as the movable wear parts are protected from dust, water, etc. The side guard 35 also functions as a guide for the displaceably provided blade guard 36, in connection with which one or more locking members 39 are provided for setting the position of the blade guard 36 along the side guard 35 and hence also setting the starting position 37 of the folding guard 37. The latter namely is provided by means of a suitable hinge 40 at one end of the blade guard 36, allowing it to be folded from an active position in which it protects the tool 3. The displaceable blade guard 36 and the folding guard 37 in combination have an L-like shape as viewed from the side and suitably a U- or V-shaped cross-section in order to protect it, e.g., from dust and water that may be sprayed from the tool. At the end which is opposite to the folding guard 37 the holding device 6 for further devices is provided. Due to the design of the tool guard 5, the arrangement of the tool guard as well as the dust vacuum cleaner device, for example, the scatter of dust and water therefore will be minimal.

The said locking members 39 consist of three screws according to the shown embodiments; one screw provided to act from the side against the side guard 35 and two further screws provided to act against the edge guard 38 from different sides of the bar 20.

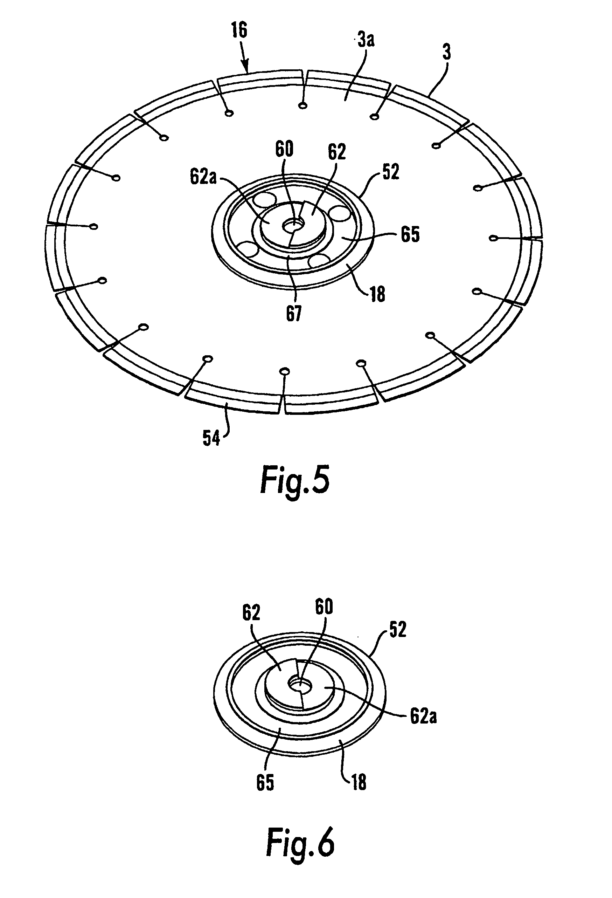

With reference to Figs. 5-10 there will now in the following be described more in detail how the tool unit or tool units, which are characteristic for an aspect of the invention and which have been designated 50 and 51, respectively, are designed, and also how the front driving wheel 16b is designed and provided at the outer end of the bar 20, said outer end also being referred to as the bar point 22, and further how the power transmission device, said transmission device according to the shown embodiment being a driving belt of the V-belt type 17, and the edge guard 38 are provided.

A tool unit 50 consists of a disk shaped, rotatable tool, such as the saw or cutter blade 3 on the machine 1 shown in Figs. 1, 2 and 4, and a driving wheel half 52, which is also referred to as driving member, when it is united with the tool 3. The tool 3 consists of a flat disk, the peripheral edge portion 54 of which is thicker, i.e. has a larger lateral extension than the rest of the tool, and constitutes the working part of the tool 3. The edge portion 54, e.g., may be equipped/tipped with diamonds or other grinding agents, be provided with teeth, such as on a conventional saw blade, or consist of the edge of e.g. a carborundum disk. The tool 3 and the driving wheel half/driving member 52 may be united with one another, e.g., through welding, soldering, gluing, riveting, or in any other mode, such as laser welding. According to the embodiment, the tool 3 and the driving member 52 of the tool unit 50 are united with one another by spot welding. The spot welds are designated 55 in Fig. 8 and Fig. 9.

The driving wheel half/driving member 52 which is integrated with the disk shaped tool 3 in the integrated tool unit 50, has a side 56 which is flat in order to be able to contact the tool 3 of the integrated tool unit 50. An annular projection 57 is designed such that it can extend into and fit in a central hole 58 of the tool 3. Radially inside of the annular projection 57 there is a circular recess 59. A central hole 60 extends through the driving wheel half/driving member 52.

On the opposite side of the driving wheel half 52 there is a central axle part 62, which also can be defined as an axle spindle. The peripheral part 63 of the driving wheel half/driving member 52 is provided with a bevelled surface 64 on that side which is turned from the tool 3 of the integrated tool unit 50. Between the peripheral part 63 and the axle part 62 there is a major, annular recess 65, so that a thin web 66 is formed between the recess 65 and the flat side 56. Radially inside of the recess 65 there is an annular, thicker portion 67.

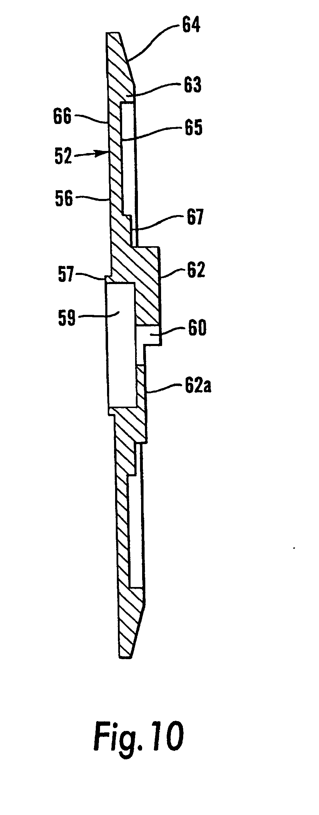

The front driving wheel 16b is formed of two, according to the embodiment, identically shaped driving wheel halves/driving members 52, which are provided such that the axle parts/axle spindles 62, 62' are turned towards one another to form a parted wheel shaft. This, however, does not prevent the driving wheel halves/driving members from having different shapes, provided their functional basic principles are the same. In order to provide a coupling between the axle parts 62, 62', the axle part of each driving wheel half 52, 52', according to the embodiment, is cut-down a distance in that part of the axle parts 62, 62' which in the mounted driving wheel 16b are turned towards one another. One such cut-down portion has been designated 62a in Fig. 10 and is semicircular. It should be understood that also other coupling devices can be conceived, e.g. pins and holes in and on the axle parts/axle spindles 62, 62' which are turned towards one another.

Fig. 8 shows how the driving wheel 16b is formed of two driving wheel halves 52, 52' of the type which has been described with reference to Fig. 10, which driving wheel halves are brought together against one another. In order to provide the coupling between the driving wheel halves 52, 52', one of the driving wheel halves is turned 180° relative to the other one, so that the cut-down portion 62a of one of the driving wheel halves abuts the not cut-down axle part of the other driving wheel half. Between the thus brought together driving wheel halves there is formed a wedge-shaped groove 18, Fig. 8, for a V-belt 17 between the bevelled surfaces 64 of the peripheral parts of the driving wheel halves.

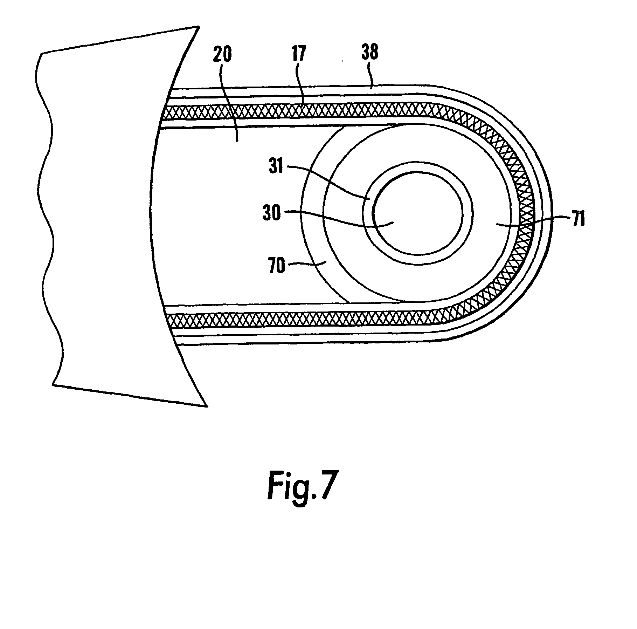

Reference is now also made to Fig. 7, which shows the region of the tip portion 22 of the bar 20, including the centrally placed hole 30, in which the bearing 31 is permanently fastened, e.g., by soldering or by press fit. At a distance inside of the hole 30 there is a circular recess 70, which is concentric with the hole 30 and dimensioned and located such that it can accommodate the peripheral part 63 of a driving wheel half/driving member 52. Fig. 7 also shows how the V-belt 17 extends along the bar 20 and around the bar tip 22 at a small distance from the bar 20 and is surrounded by the edge guard 38 at a small distance outside of the V-belt 17. The edge guard 38 consists of a rail, suitably a steel rail having the same breadth as the V-belt 17. It should be mentioned that the recess 70 on both sides of the bar can be made substantially broader than what is shown in Fig. 7 in order to accommodate the peripheral parts 63 of smaller as well as of larger driving wheel halves, in order that the machine shall be able to work with driving wheels with diameters within a certain dimensional range according to an embodiment of the invention.

During the assembly, the tool unit 50 with the axle part 62 is brought into the hole 30 in the bar tip 22 until the annular, thicker portion 67 abuts the bearing 31. In a corresponding way the other driving wheel half 52' is moved from the opposite direction into the hole 30, turned 180° relative to the first inserted driving wheel half/driving member 52, so that the shaft parts 62 of the two driving wheel halves will engage one another, wherein also the latest inserted driving wheel half will abut the bearing 31 with its annular thicker portion 67. The annular part 71, which surrounds the bearing 31, and which is restricted rearwise by the annular recess 70, is accommodated in the annular recess 65 of the tool driving wheel halves. The two driving wheel halves 52, 52' are fixed to one another by means of a nut 74 and a screw 73, which extends through the through hole 60a which is formed in the shaft, which in turn is formed of the two axle parts 62. A screw head 75 and the nut 74 are accommodated in the recesses 59 of the driving wheel halves 52, 52'. By axial displacement of the bar 20 outwards from the machine body 2 via the fastening and stretching device 23, i.e., by forward movement of the bar 20, the V-belt 17 then is caused to adopt a proper position in the wedge shaped groove 18 with a suitable contact pressure against the two bevelled surfaces 64 which between them form the wedge shaped groove 18.

The embodiment shown in Fig. 9 deviates from that one which has been described with reference to Fig. 8 only therein that the two driving wheel halves 52, 52' constitute driving members in integrated tool units 50 and 51, respectively. The tool which is included in the tool unit 51 has been designated 3' in Fig. 9 and has a smaller diameter than the tool 3 which is included in the tool unit 50. In other respects, the design is the same as has been described with reference to Fig. 8, as well as the mode of assembly.

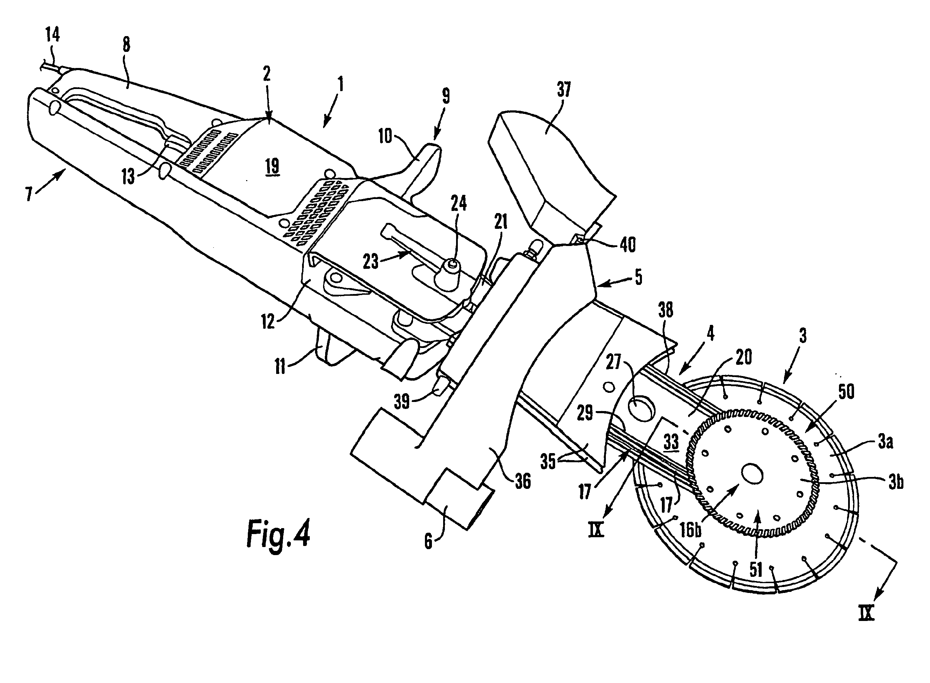

The method of working with the machine 1 and with the tool unit/tool units 50, 51 according to the invention, now also will be further explained. It is assumed that the machine 1 is equipped with two tool units 50, 51, i.e. in the way which is shown in Fig. 4 and Fig. 9. Before starting the work, the tool guard 5 is moved forwards to the functional position which is shown in Fig. 1. The motor in the machine body 2 is started. The operator controls the machine 1 so that the motor is caused to drive the power transmission device, which is included in the power transmission of the machine, i.e. a driving belt 17. The driving belt 17, which is in engagement in the wedge shaped groove 18, drives the driving wheel 16b, the two driving wheel halves/driving members 52 of which in this case are integrated parts of the tool units 50 and 51, causing the tools 3 and 3' to rotate.

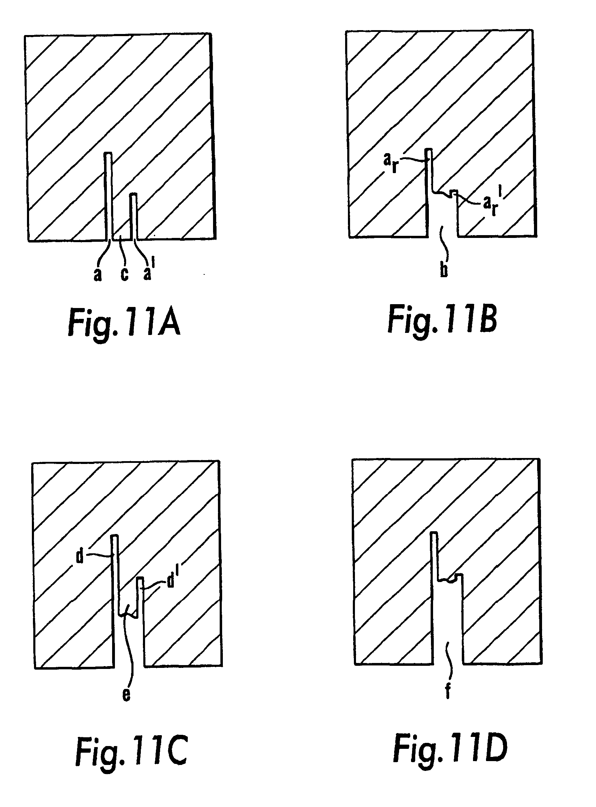

By pressing against the object to be worked, there is first established a saw kerf in the object by means of the larger tool 3. When the tool 3 has penetrated the object to a depth corresponding to the radial difference between the two tools 3 and 3', also the smaller tool 3' begins penetrating the object to form a kerf in the object, parallel with the kerf that is formed by the larger tool 3. The working can proceed in this way until the tools 3 and 3' have penetrated so deeply that the edge guard 38 touches the object. The first kerfs, which thus are established in the object by means of the tools 3 and 3', are designated a and a', respectively, in Fig. 11A. The work proceeds until the kerfs a and a' in the object also have achieved a desired length. During this phase, the machine 1 may be moved along the surface of the object with the edge guard 38 sliding against the object.

At least if the conditions are favourable, e.g. that the material of the object that is worked is not too tough, and/or if the distance between the established kerfs in the object are sufficiently short, the material c between the kerfs **a** and **a'** loosens successively as they are formed because of the vibrations of the tools and/or because of friction between the tools and the material between the kerfs. The work therefore can proceed continuously by moving the machine 1 along the surface of the object with the edge guard 30 sliding against the bottom of the wider groove that is being formed in the object. During this phase, also the tool carrier/the bar 20, the edge guard 38 and finally, when the blade guard has been folded backwards, also the side guard 35 can be entered into the groove.

If the material c between the first kerfs **a** and **a'** do not loosen in connection with the establishment of the kerfs in the object, the machine is operated in the following mode, when the first kerfs have been established, preferably when they also have achieved a desired length. In this case, the machine is withdrawn, so that the tools 3, 3' leave the established kerfs. Next step according to this mode of operating the machine according to the invention is to remove the material c between the two first established kerfs a and **a'** in the object. The technique, which is employed for removing this material may depend on the kind of material of the object. E.g. depending on the kind of material, the material can be loosened by breaking, hammering, wedging, axing, knocking, vibrating, blowing, spraying, milling, drawing, or prizing or by any combination of any of said or other measures. Thus, there is established a wider groove b in the object, which allows the tool units 50, 51 including the bar 20, the driving wheel 16b and the driving belt 17, the edge guard 38 and the side guard 35 to penetrate into the object, Fig. 11B. In the object, there remains a portion **a**_{**r**} of the kerf **a,** which was formed by means of the larger tool 3, possibly portions **a**_{**r**}**'** of the kerf **a'** which was formed by means of the smaller tool 3', which kerf or kerfs **a**, **a**_{**r**}**'** may be used as guiding trails during the next step of operation, when the operator drives the tools 3, 3' deeper into the object, Fig. 11C. The new kerfs, which during this phase are established in the object, are designated **d** and **d**', respectively, and the material between the new kerfs has been designated **e** in Fig. 11C. The material **e** can be removed in the same way as has been described in the foregoing, so that a deeper groove **f** which has flat and parallel walls and the same width as the groove **b**, Fig. 11D. The work may proceed in this way by alternately establishing deeper and deeper parallel kerfs and removal of the material between the kerfs until the desired or maximal possible working depth has been achieved. The maximal working depth is restricted by the tool guard 5, the foldable part 37 of which, however, can be folded away such that it does not restrict the depth of penetration. The whole guard 35 may, when the locking members 39 have been released, be displaced in a direction opposite to the direction of penetration, rearwards towards the machine body 2. It is understood that it is possible to work stepwise in this way into the object and that after each working operation by means of the tool units, the material between the kerfs is removed, except after the last working operation, when the desired depth has been achieved by means of the larger tool 3.

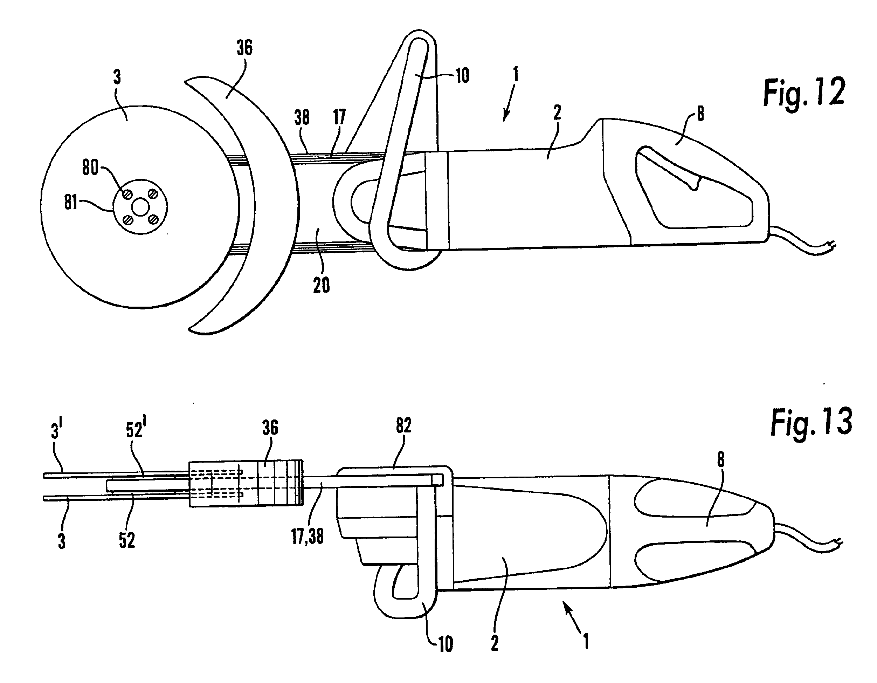

Figs. 12 and 13 show an example of how a machine body 2 of known design, containing an electric driving motor, can be equipped according to the principles of the invention. Thus, in the front part of the machine 1 there is an elongated tool carrier 20 in the form of a flat bar, carrying two diamond-tipped blades 3, 3' of the flat sawing type, each having a driving wheel half 52, 52' secured to the inner side of the saw blades by welding or riveting. The tools/blades 3, 3' in this case are united with one another through recessed screws 80, which extend through a washer 81, which is recessed in one of the tools 3. The screws 80 are secured by screwing in that driving wheel half 52' which is connected to the opposite tool 3'.

A front blade guard 36 is shown only schematically. It is displaceable along the bar 20, which is located adjacent to one side of the machine 1. Suitably the blade guard 3 and a rear driving belt guard 82 can be demounted in order also to make it possible to use the machine 1 for sawing close to walls, roofs, etc. in corners.

## Claims

1. Cutting or sawing machine comprising a machine body (2) and an elongated tool carrier (20) with a front end and a rear end, the rear end being connected to the machine body, a driving wheel and at least one disk shaped tool (3) rotatably mounted in the front end of the tool carrier; a power source, and a power transmission (17) from the power source for the rotation of the driving wheel and the at least one disk shaped tool, said driving wheel including two driving members (52, 52') at an axial distance from one another, **characterised in**
- **that** one driving member (52, 52') is provided on each side of the tool carrier (20), a front end portion of which is provided between the two driving members,
- **that** a peripheral portion of each of the driving members extends beyond the front end of the tool carrier,
- **that** each of the driving members, in the region of said peripheral portion, has at least one circumferential driving surface (64) provided to be able to cooperate with said power transmission (17) and,
- **that** at least one of the driving members is united with a first side of said at least one disk shaped tool to form a tool unit.

2. Machine according to claim 1, **characterised in that** the tool carrier (20) has an essentially greater width than thickness, the width being defined as the extension of the tool carrier in a plane which is perpendicular to an axis of rotation of the tool unit and perpendicular to the longitudinal direction of the tool carrier.

3. Machine according to any of claims 1 or 2, **characterised in that** the tool carrier consists of an elongated bar.

4. Machine according to any of claims 1-3, **characterised in that** an annular recess (65) is provided in each of the driving members on that side of the driving members which face one another, said annular recesses enabling the accommodation of front end side portions of the elongated tool carrier.

5. Machine according to any of claims 1 or 4, **characterised in that** the driving members, in front of said front end of the tool carrier, between them form a power transmission groove (18), in which an endless power transmission device (17) is in engagement in front of the tool carrier for rotation of the driving wheel.

6. Machine according to any of claims 4-5, **characterised in that** the driving members are connected to one another via an axle (62, 62'), that a bearing (31) is provided in the tool carrier, and that said axle is journalled in said bearing.

7. Machine according to claim 5, **characterised in that** the power transmission device has a width which is maximally as large as the thickness of the driving wheel.

8. Machine according to any of claims 5-7, **characterised in that** the power transmission groove is a V-belt groove (18) formed of bevelled surfaces (64) on the two driving members, and that the endless power transmission device is a V-belt.

9. Machine according to any of claims 5-7, **characterised in that** the power transmission groove consists of a toothed belt groove formed of toothed, circumferential driving surfaces on the driving members, which consist of driving wheel halves, and that the endless power transmission device consists of a toothed belt in engagement with the teeth of the toothed belt groove.

10. Machine according to any of claims 5-9, **characterised in that** it comprises guard devices for the power transmission device, said guard devices comprising an edge guard (38) which extends outside of the power transmission device, preferably at a distance from and along the power transmission device.

11. Machine according to any of claims 1-10, **characterised in that** it comprises only one tool unit.

12. Machine according to claim 11, **characterised in that** the tool carrier (20) has a length which is at least longer than the radius of the disk shaped tool (3) and that the tool unit is provided in the front end of the tool carrier.

13. Machine according to claim 12, **characterised in that** the tool carrier (20) has a length which is at least larger than the diameter of the tool (3).

14. Machine according to claim 12 or 13, **characterised in that** the entire machine body (2) is provided at a distance from the tool (3) with reference to the radial direction of the tool, and that the tool carrier (20) extends from the machine body over said radial distance and further to and beyond the centre of the tool.

15. Machine according to any of claims 11-14, **characterised in that** the axial distance between the first side of the tool and a centre plane of the tool carrier is at least 2.5 and maximally 50 mm, preferably maximally 25, suitably maximally 10 mm.

16. Machine according to any of claims 1-10, **characterised in that** it comprises at least two tool units (3, 3'), which are coaxial and mounted in the tool carrier.

17. Machine according to any of claims 1-10 and 16, **characterised in that** it comprises at least two disk shaped tools which are outer tools of a tool assembly, each of said outer tools having a first side which is an inner side of the tool, a second side which is an outer side of the tool, and a peripheral edge portion which is the working part of the tool, and that that side of the peripheral edge portion which is part of the outer side of the outer tools defines a plane which forms a limit of the maximally projecting part of the tool assembly in the region of the said two outer sides.

18. Machine according to claim 16 or 17, **characterised in that** the number of tool units is two.

19. Machine according to any of claims 16-18, **characterised in that** the tools have equally large diameters.

20. Machine according to claim 19, **characterised in that** the tool carrier has a length which is at least larger than the radius of the tools, and that the tools are provided in the front end of the tool carrier.

21. Machine according to claim 20, **characterised in that** the tool carrier has a length which is at least larger than the diameter of the tools.

22. Machine according to claim 20 or 21, **characterised in that** the machine body (2) is provided at a distance from the tools (3,3') with reference to the radial direction of the tools, and that the tool carrier extends from the machine body over said distance and further on to and beyond the common centre of the tools.

23. Machine according to any of claims 16-18, **characterised in that** the tools have differently large diameters.

24. Machine according to claim 23, **characterised in that** the tool carrier has a length which is at least longer than the radius of the largest tool (3), and that the tools are provided in the front end of the tool carrier.

25. Machine according to claim 24, **characterised in that** the tool carrier has a length which is at least longer than the diameter of the largest tool (3).

26. Machine according to claim 24 or 25, **characterised in that** the machine body (2) is provided at a distance from the largest tool (3) with reference to the radial direction of the tool, and that the tool carrier extends from the machine body over said distance and further on to and beyond the common centre of the tools.

27. Machine according to any of claims 23-26, **characterised in that** the distance between the tools is shorter than the radius of the smallest tool.

28. Machine according to any of claims 16-27, **characterised in that** the distance between the tools is at least 5 and maximally 100 mm, preferably maximally 50 mm, suitably maximally 20 mm.

## Patentansprüche

1. Trenn- oder Sägemaschine mit einem Maschinengehäuse (2) und einem länglichen Werkzeugträger (20) mit einem vorderen Ende und einem hinteren Ende, wobei das hinteren Ende mit dem Maschinengehäuse verbunden ist, einem Antriebsrad und wenigstens einem scheibenförmigen Werkzeug (3), welches in dem vorderen Ende des Werkzeugträgers drehbar angeordnet ist, einer Energiequelle und einer Leistungsübertragung (17) von der Energiequelle zum Drehen des Antriebsrades und des wenigstens einen scheibenförmigen Werkzeuges, wobei das Antriebsrad zwei zueinander axial beabstandete Antriebselemente (52, 52') enthält, **dadurch gekennzeichnet,**
- **daß** auf jeder Seite des Werkzeugträgers (20), von dem ein Abschnitt des vorderen Endes zwischen den beiden Antriebselementen angeordnet ist, ein Antriebselement (52, 52') angeordnet ist,
- **daß** sich ein peripherer Abschnitt eines jeden Antriebselementes über das Vordere Ende des Werkzeugträgers hinaus erstreckt,
- **daß** jedes der Antriebselemente im Bereich des peripheren Abschnittes über wenigstens eine umlaufende Antriebsfläche (64) verfügt, die dazu eingerichtet ist, mit der Leistungsübertragung (17) zusammenzuwirken, und
- **daß** zumindest eines der Antriebselemente mit einer ersten Seite des wenigstens einen scheibenförmigen Werkzeuges verbunden ist, um eine Werkzeugeinheit zu bilden.

2. Maschine nach Anspruch 1, **dadurch gekennzeichnet, daß** der Werkzeugträger (20) eine wesentlich größere Breite als Dicke aufweist, wobei die Breite als die Erstreckung des Werkzeugträgers in einer Ebene definiert ist, die senkrecht zu einer Drehachse der Werkzeugeinheit und senkrecht zur Längsrichtung des Werkzeugträgers verläuft.

3. Maschine nach einem der Ansprüche 1 oder 2, **dadurch gekennzeichnet, daß** der Werkzeugträger aus einer länglichen Stange besteht.

4. Maschine nach einem der Ansprüche 1 - 3, **dadurch gekennzeichnet, daß** in jedem der Antriebselemente auf denjenigen Seiten der Antriebselemente, die aufeinander zu weisen, eine ringförmige Vertiefung (65) vorgesehen ist, wobei diese ringförmigen Vertiefungen die Aufnahme von Seitenabschnitten des vorderen Endes des länglichen Werkzeugträgers ermöglichen.

5. Maschine nach einem der Ansprüche 1 oder 4, **dadurch gekennzeichnet, daß** die Antriebselemente vor dem vorderen Ende des Werkzeugträgers zwischen sich eine Leistungsübertragungsnut (18) bilden, in welcher eine endlose Leistungsübertragungsvorrichtung (17) vor dem Werkzeugträger zum Drehen des Antriebsrades eingreift.

6. Maschine nach einem der Ansprüche 4 bis 5, **dadurch gekennzeichnet, daß** die Antriebselemente über eine Achse (62, 62') verbunden sind, daß ein Lager (31) in dem Werkzeigträger vorgesehen ist und daß die Achse in dem Lager gelagert ist.

7. Maschine nach Anspruch 5, **dadurch gekennzeichnet, daß** die Leistungsübertragungsvorrichtung eine Breite aufweist, die höchstens so groß wie die Dicke des Antriebsrades ist.

8. Maschine nach einem der Ansprüche 5-7, **dadurch gekennzeichnet, daß** die Leistungsübertragungsnut eine aus abgeschrägten Oberflächen (64) auf den beiden Antriebselementen gebildete Keilriemennut (18) ist und daß die endlose Leistungsübertragungsvorrichtung ein Keilriemen ist.

9. Maschine nach einem der Ansprüche 5-7, **dadurch gekennzeichnet, daß** die Leistungsübertragungsnut aus einer aus gezahnten, entlang des Umfangs verlaufenden Oberflächen der Antriebselemente, die aus Antriebsradhälften bestehen, gebildeten Zahnriemennut besteht und daß die endlose Leistungsübertragungsvorrichtung aus einem mit den Zähnen der Zahnriemennut in Eingriff stehenden Zahnriemen besteht.

10. Maschine nach einem der Ansprüche 5-9, **dadurch gekennzeichnet, daß** sie Schutzvorrichtungen für die Leistungsübertragungsvorrichtung umfaßt, wobei die Schutzvorrichtungen einen Kantenschutz (38) umfassen, der an der Außenseite der Leistungsübertragungsvorrichtung, vorzugsweise in einem Abstand zu der und entlang der Leistungsübertragungsvorrichtung, verläuft.

11. Maschine nach einem der Ansprüche 1-10, **dadurch gekennzeichnet, daß** sie nur eine Werkzeugeinheit aufweist.

12. Maschine nach Anspruch 11, **dadurch gekennzeichnet, daß** der Werkzeugträger (20) eine Länge hat, die zumindest länger als der Radius des scheibenförmigen Werkzeuges (3) ist, und daß die Werkzeugeinheit an dem vorderen Ende des Werkzeugträgers angeordnet ist.

13. Maschine nach Anspruch 12, **dadurch gekennzeichnet, daß** der Werkzeugträger (20) eine Länge hat, die zumindest größer als der Durchmesser des Werkzeuges (3) ist.

14. Maschine nach Anspruch 12 oder 13, **dadurch gekennzeichnet, daß** das gesamte Maschinengehäuse (2) bezüglich der radialen Richtung des Werkzeuges in einem Abstand zu dem Werkzeug (3) angeordnet ist und daß der Werkzeugträger (20) sich von dem Maschinengehäuse aus über den radialen Abstand und weiter zu der Mitte des Werkzeuges und über diese hinaus erstreckt.

15. Maschine nach einem der Ansprüche 11-14, **dadurch gekennzeichnet, daß** der axiale Abstand zwischen der ersten Seite des Werkzeuges und der Mittelebene des Werkzeugträgers wenigstens 2, 5 und höchstens 50 mm, vorzugsweise höchstens 25 mm, angemessenerweise höchstens 10 mm beträgt.

16. Maschine nach einem der Ansprüche 1 -10, **dadurch gekennzeichnet, daß** sie wenigstens zwei Werkzeugeinheiten (3, 3') aufweist, die koaxial und in dem Werkzeugträger angeordnet sind.

17. Maschine nach einem der Ansprüche 1 bis 10 und 16, **dadurch gekennzeichnet, daß** sie wenigstens zwei scheibenförmige Werkzeuge aufweist, die äußere Werkzeuge einer Werkzeuganordnung sind, wobei jedes der äußeren Werkzeuge eine erste Seite, die eine innere Seite des Werkzeuges ist, eine zweite Seite, die eine äußere Seite des Werkzeuges ist, und einen peripheren Kantenabschnitt, der der Arbeitsteil des Werkzeuges ist, aufweist und daß die Seite des peripheren Kantenabschnittes, die Teil der äußeren Seite der äußeren Werkzeuge ist, eine Ebene definiert, die eine Begrenzung des maximal vorstehenden Teils der Werkzeugbaugruppe im Bereich der beiden äußeren Seiten bildet.

18. Maschine nach Anspruch 16 oder 17, **dadurch gekennzeichnet, daß** die Anzahl der Werkzeugeinheiten zwei ist.

19. Maschine nach einem der Ansprüche 16-18, **dadurch gekennzeichnet, daß** die Werkzeuge gleich große Durchmesser haben.

20. Maschine nach Anspruch 19, **dadurch gekennzeichnet, daß** der Werkzeugträger eine Länge aufweist, die zumindest länger ist als der Radius der Werkzeuge, und daß die Werkzeuge an dem vorderen Ende des Werkzeugträgers angeordnet sind.

21. Maschine nach Anspruch 20, **dadurch gekennzeichnet, daß** der Werkzeugträger eine Länge hat, die zumindest größer als der Durchmesser der Werkzeuge ist.

22. Maschine nach Anspruch 20 oder 21, **dadurch gekennzeichnet, daß** das Maschinengehäuse (2) bezüglich der radialen Richtung der Werkzeuge in einem Abstand zu den Werkzeugen (3, 3') angeordnet ist und daß der Werkzeugträger sich von dem Maschinengehäuse aus über den Abstand und weiter zu der gemeinsamen Mitte der Werkzeuge und über diese hinaus erstreckt.

23. Maschine nach einem der Ansprüche 16-18, **dadurch gekennzeichnet, daß** die Werkzeuge unterschiedlich große Durchmesser haben.

24. Maschine nach Anspruch 23, **dadurch gekennzeichnet, daß** der Werkzeugträger eine Länge aufweist, die zumindest länger ist als der Radius des größten Werkzeuges (3), und daß die Werkzeuge an dem vorderen Ende des Werkzeugträgers angeordnet sind.

25. Maschine nach Anspruch 24, **dadurch gekennzeichnet, daß** der Werkzeugträger eine Länge hat, die zumindest größer als der Durchmesser des größten Werkzeuges (3) ist.

26. Maschine nach Anspruch 24 oder 25, **dadurch gekennzeichnet, daß** das Maschinengehäuse (2) bezüglich der radialen Richtung dieses Werkzeuges in einem Abstand zu dem größten Werkzeug (3) angeordnet ist und daß der Werkzeugträger sich von dem Maschinengehäuse aus über den Abstand und weiter zu der gemeinsamen Mitte der Werkzeuge und über diese hinaus erstreckt.

27. Maschine nach einem der Ansprüche 23-26, **dadurch gekennzeichnet, daß** der Abstand zwischen den Werkzeugen kleiner ist als der Radius des kleinsten Werkzeuges.

28. Maschine nach einem der Ansprüche 16-27, **dadurch gekennzeichnet, daß** der Abstand zwischen den Werkzeugen wenigstens 5 und höchstens 100mm, vorzugsweise höchstens 50 mm, angemessenerweise höchstens 20 mm beträgt.

## Revendications

1. Machine à couper ou à scier comprenant un corps (2) de machine et un porte-outil allongé (20) ayant une extrémité avant et une extrémité arrière, l'extrémité arrière étant reliée au corps de machine, une roue d'entraînement et au moins un outil (3) en forme de disque monté de façon à pouvoir tourner dans l'extrémité avant du porte-outil ; une source de puissance, et une transmission de puissance (17) partant de la source de puissance pour faire tourner la roue d'entraînement et le, au moins un, outil en forme de disque, ladite roue d'entraînement comprenant deux éléments d'entraînement (52, 52') à une distance axiale l'un de l'autre, **caractérisée en ce que** :
- un élément d'entraînement (52, 52') est prévu sur chaque côté du porte-outil (20), dont une partie extrême avant est située entre les deux éléments d'entraînement,
- une partie périphérique de chacun des éléments d'entraînement s'étend au-delà de l'extrémité avant du porte-outil,
- chacun des éléments d'entraînement, dans la région de ladite partie périphérique, présente au moins une surface circonférentielle (64) d'entraînement prévue de façon à pouvoir coopérer avec ladite transmission de puissance (17), et
- au moins l'un des éléments d'entraînement est solidarisé avec un premier côté dudit, au moins un, outil en forme de disque pour former un module d'outil.

2. Machine selon la revendication 1, **caractérisée en ce que** le porte-outil (20) a une largeur essentiellement supérieure à l'épaisseur, la largeur étant définie comme étant l'étendue du porte-outil dans un plan qui est perpendiculaire à un axe de rotation du module d'outil et perpendiculaire à la direction longitudinale du porte-outil.

3. Machine selon l'une des revendications 1 et 2, **caractérisée en ce que** le porte-outil consiste en une barre allongée.

4. Machine selon l'une quelconque des revendications 1 à 3, **caractérisée en ce qu'**un évidement annulaire (65) est prévu dans chacun des éléments d'entraînement sur les côtés des éléments d'entraînement qui se font face, lesdits évidements annulaires permettant le logement de parties de côté de l'extrémité avant du porte-outil allongé.

5. Machine selon l'une quelconque des revendications 1 ou 4, **caractérisée en ce que** les éléments d'entraînement, en avant de ladite extrémité avant du porte-outil forment entre eux une gorge (18) de transmission de puissance dans laquelle un dispositif sans fin (17) de transmission de puissance est engagé en avant du porte-outil pour faire tourner la roue d'entraînement.

6. Machine selon l'une quelconque des revendications 4 et 5, **caractérisée en ce que** les éléments d'entraînement sont reliés entre eux par l'intermédiaire d'un moyeu (62, 62'), **en ce qu'**un palier (31) est prévu dans le porte-outil et **en ce que** ledit moyeu tourillonne dans ledit palier.

7. Machine selon la revendication 5, **caractérisée en ce que** le dispositif de transmission de puissance a une largeur qui est au maximum aussi grande que l'épaisseur de la roue d'entraînement.

8. Machine selon l'une quelconque des revendications 5 à 7, **caractérisée en ce que** la rainure de transmission de puissance est une rainure (18) pour courroie trapézoïdale formée de surfaces chanfreinées (64) sur les deux éléments d'entraînement, et le dispositif sans fin de transmission de puissance est une courroie trapézoïdale.

9. Machine selon l'une quelconque des revendications 5 à 7, **caractérisée en ce que** la rainure de transmission de puissance consiste en une rainure pour courroie crantée formée de surfaces circonférentielles dentées d'entraînement sur les éléments d'entraînement, qui consistent en des demi-roues d'entraînement, et le dispositif sans fin de transmission de puissance consiste en une courroie crantée qui est engagée avec les dents de la rainure pour courroie crantée.

10. Machine selon l'une quelconque des revendications 5 à 9, **caractérisée en ce qu'**elle comporte des dispositifs de protection pour le dispositif de transmission de puissance, lesdits dispositifs de protection comportant une protection de bord (38) qui s'étend sur le côté extérieur du dispositif de transmission de puissance, avantageusement à distance et le long du dispositif de transmission de puissance.

11. Machine selon l'une quelconque des revendications 1 à 10, **caractérisée en ce qu'**elle ne comporte qu'un module d'outil.

12. Machine selon la revendication 11, **caractérisée en ce que** le porte-outil (20) a une longueur qui est au moins supérieure au rayon de l'outil (3) en forme de disque et **en ce que** le module d'outil est prévu dans l'extrémité avant du porte-outil.

13. Machine selon la revendication 12, **caractérisée en ce que** le porte-outil (20) a une longueur qui est au moins supérieure au diamètre de l'outil (3).

14. Machine selon la revendication 12 ou 13, **caractérisée en ce que** le corps entier (2) de la machine est placé à une distance de l'outil (3) en référence à la direction radiale de l'outil, et **en ce que** le porte-outil (20) s'étend depuis le corps de la machine sur ladite distance radiale et en outre jusqu'au, et au-delà du, centre de l'outil.

15. Machine selon l'une quelconque des revendications 11 à 14, **caractérisée en ce que** la distance axiale entre le premier côté de l'outil et un plan central du porte-outil est d'au moins 2,5 et au plus de 50 mm, de préférence au plus de 25, et de façon appropriée au plus de 10 mm.

16. Machine selon l'une quelconque des revendications 1 à 10, **caractérisée en ce qu'**elle comporte au moins deux modules d'outil (3, 3') qui sont coaxiaux et montés dans le porte-outil.

17. Machine selon l'une quelconque des revendications 1 à 10 et 16, **caractérisée en ce qu'**elle comporte au moins deux outils en forme de disque qui sont des outils extérieurs d'un ensemble d'outils, chacun desdits outils extérieurs ayant un premier côté qui est un côté intérieur de l'outil, un second côté qui est un côté extérieur de l'outil et une partie de bord périphérique qui est la partie de travail de l'outil, et **en ce que** le côté de la partie de bord périphérique qui est la partie du côté extérieur des outils extérieurs définit un plan qui forme une limite de la partie faisant le plus saillie de l'ensemble d'outils dans la région desdits deux côtés extérieurs.

18. Machine selon la revendication 16 ou 17, **caractérisée en ce que** le nombre de modules d'outil est de deux.

19. Machine selon l'une quelconque des revendications 16 à 18, **caractérisée en ce que** les outils ont des diamètres de même grandeur.

20. Machine selon la revendication 19, **caractérisée en ce que** le porte-outil a une longueur qui est au moins supérieure au rayon des outils, et **en ce que** les outils sont placés dans l'extrémité avant du porte-outil.

21. Machine selon la revendication 20, **caractérisée en ce que** le porte-outil a une longueur qui est au moins supérieure au diamètre des outils.

22. Machine selon la revendication 20 ou 21, **caractérisée en que** le corps (2) de la machine est placé à une distance des outils (3, 3') en référence à la direction radiale des outils, et en ce que le porte-outil s'étend depuis le corps de la machine sur ladite distance et en outre jusqu'à et au-delà du centre commun des outils.

23. Machine selon l'une quelconque des revendications 16 à 18, **caractérisée en ce que** les outils ont des diamètres de grandeurs différentes.

24. Machine la revendication 23, **caractérisée en ce que** le porte-outil a une longueur qui est au moins plus grande que le rayon de l'outil (3) le plus grand, et **en ce que** les outils sont placés dans l'extrémité avant du porte-outil.

25. Machine selon la revendication 24, **caractérisée en ce que** le porte-outil a une longueur qui est au moins supérieure au diamètre de l'outil (3) le plus grand.

26. Machine selon la revendication 24 ou 25, **caractérisée en ce que** le corps (2) de la machine est placé à une distance de l'outil (3) le plus grand en référence à la direction radiale de l'outil, et **en ce que** le porte-outils s'étend depuis le corps de la machine sur ladite distance et en outre jusqu'au, et au-delà du, centre commun des outils.

27. Machine selon l'une quelconque des revendications 23 à 26, **caractérisée en ce que** la distance entre les outils est inférieure au rayon de l'outil le plus petit.

28. Machine selon l'une quelconque des revendications 16 à 27, **caractérisée en ce que** la distance entre les outils est d'au moins 5 et d'au plus 100 mm, de préférence d'au plus 50 mm, et de façon appropriée d'au plus 20 mm.
